# EUROPÄISCHE PATENTSCHRIFT

(11) **EP 1 225 679 B1**
(45) Veröffentlichungstag und Bekanntmachung des Hinweises auf die Patenterteilung: **18.08.2004**
(21) Anmeldenummer: 01810051.1
(22) Anmeldetag: 19.01.2001
(51) Int. Cl.: H02K 15/095

(54) **Verfahren und Vorrichtung zum Wicklen der Feldspulen eines zweipoligen Stators**
Method and apparatus for winding field coils of two-pole stators
Procédé et dispositif pour enrouler des bobines magnétiques de stators à deux pôles

(43) Veröffentlichungstag der Anmeldung: 24.07.2002
(73) Patentinhaber: ATS Wickel- und Montagetechnik AG, 5436 Würenlos (CH)
(72) Erfinder: Meier, Konrad, 8105 Watt (CH)
(74) Vertreter: Patentanwälte Breiter + Wiedmer AG

(56) Entgegenhaltungen:
- WO-A-99/35730
- DE-A- 4 037 953
- US-A- 4 340 186
- PATENT ABSTRACTS OF JAPAN vol. 1995, no. 07, 31. August 1995 (1995-08-31) & JP 07 107686 A (SHIBAURA ENG WORKS CO LTD), 21. April 1995 (1995-04-21)
- PATENT ABSTRACTS OF JAPAN vol. 007, no. 008 (E-152), 13. Januar 1983 (1983-01-13) & JP 57 166860 A (HONDA GIKEN KOGYO KK), 14. Oktober 1982 (1982-10-14)
- PATENT ABSTRACTS OF JAPAN vol. 008, no. 053 (E-231), 9. März 1984 (1984-03-09) & JP 58 204746 A (MATSUSHITA DENKI SANGYO KK), 29. November 1983 (1983-11-29)

## Beschreibung

Die Erfindung betrifft ein Verfahren und eine Vorrichtung zum Einlegen von Draht in Form einer Feldspule zwischen Polhörner und Statorwand eines zweipoligen Stators einer elektrischen Maschine nach den Oberbegriffen der Ansprüche 1 und 6. Im Rahmen der Erfindung liegt auch eine Anlage zum gleichzeitigen Wickeln von mehreren Statorhälften.

Zweipolige Statoren von Elektromotoren mit einem Kollektoranker weisen eine geschlossene Statorwand mit zwei einander gegenüberstehenden Paaren von Polhömem auf, die den Aussendurchmesser des in der zentralen Achse des Stators angeordneten Kollektorankers teilweise überdecken. Der aus Kupfer bestehende Draht bzw. die aus diesem gefertigten Feldspulen sind zwischen den Polhömem und der Statorwand angeordnet.

Zum Wickeln der Feldspulen eines einteilig ausgebildeten zweipoligen Stators sind sogenannte Nadelwickelmaschinen bekannt, mit denen die beiden einander gegenüberliegenden Feldspulen gleichzeitig direkt in die Nuten zwischen Statorwand und Polhömem gewickelt werden können. Hierbei erfolgt die Einweisung der Drähte in den Nutgrund über sogenannte Wickelformen. Bei einer Variante erfolgt das Wickeln ohne Wickelformen, jedoch mit einem gesteuerten, spreizbaren Drahtführer.

Eine weitere Möglichkeit zum Wickeln von Statoren, insbesondere für kleine Elektromotoren, ist aus der DE-A- 40 37 953 ein zweiteiliger zweipoliger Stator bekannt. Hier werden die einzelnen Feldspulen durch Wickeln auf einer Mehrfach-Lagenwickelmaschine vorgefertigt, die Spulenschenkel isoliert und die Anschlusslitzen am Spulenanfang- und ende angebracht. Die Feldspulen werden in die von der Statorwand und den Polhömem begrenzte Nut in die Statorhälften eingelegt und fixiert. Anschliessend werden die beiden Hälften zum Stator zusammengefügt.

Messungen an Kollektormotoren haben gezeigt, dass bei grösserer Überdekkung des Ankeraussendurchmessers durch die Polhörner und bei entsprechender Wicklung eine höhere Leistung des Motors resultiert. Eine derartige Änderung des Blechschnittes eines durch beispielsweise Stanzpaketieren von Einzellamellen gefertigten Stator-Blechpaketes hätte zur Folge, dass bei einem einteiligen und demzufolge geschlossenen Stator der Raum zwischen den Polhömem nicht mehr ausreicht, um mit den oben erwähnten Nadelwickelmaschinen wickeln zu können.

Ein Verfahren und eine Vorrichtung der eingangs genannten Art sind aus der JP-A-07 107 686 bekannt.

Der Erfindung liegt die Aufgabe zugrunde, ein effizientes Verfahren der eingangs genannten Art sowie eine zu dessen Durchführung geeignete Vorrichtung zu schaffen.

Zur efindungsgemässen Lösung der Aufgabe führt ein Verfahren mit den Merkmalen von Anspruch 1.

Der erfindungswesentliche Kern liegt darin, den Blechschnitt im Bereich der neutralen Zone zu trennen und die Spulen der einzelnen Statorhälften direkt mit einem Wickelarm (Flyer) einzubringen. Auf diese Weise ist es möglich, mehrere Statorhälften gleichzeitig zu wickeln. Weiter resultiert durch die geometrische Gestaltung des Blechschnittes für das direkte Einwickeln mittels eines Flyers eine höhere Füllung der Nut mit Draht sowie eine geringere Breite des beispielsweise durch Stanzpaketieren von Einzellamellen hergestellten Blechpaketes bzw. Stators, was insbesondere für die Entwicklung von kleinen Elektrogeräten von Vorteil ist.

Weitere Vorteile des erfindungsgemässen Verfahrens liegen darin, dass das Anlegen der Spulenenden an Terminals auf der Wickelmaschine erfolgen kann. Ebenso können die stanzpaketierten Statorhälften mit Kunststoff umspritzt werden, was die Nuten-Isolation wesentlich vereinfacht.

Zweckmässigerweise sind der Wickelarm und die Draht-Leithülse entlang der Rotationsachse verschiebbar.

Eine geeignete Verbindungsmöglichkeit der Statorhälften nach durchgeführter Wicklung besteht darin, dass der Zusammenbau von je zwei Statorhälften zum Stator über eine Nut-Feder-Verbindung erfolgt. Zur Bildung der Nut/Feder-Verbindung kann beispielsweise jede Statorhälfte je eine längslaufende, querschnittlich schwalbenschwanzförmige Feder und eine dieser entsprechende längslaufende hinterschnittene Nut aufweisen.

Vorteilhafterweise ist seitlich an jeder Statorhälfte ein Kunststoffkörper aus elektrisch isolierendem Material mit Anschlusselementen für in diese eingesetzte Kontaktelemente angeordnet.

Eine zur Durchführung des Verfahrens geeignete Vorrichtung weist die Merkmale von Anspruch 6 auf.

Der Wickelarm und die Leithülse sind bevorzugt entlang der Rotationsachse

Für die rationelle Fertigung von Statoren eignet sich insbesondere eine Anlage zum gleichzeitigen Wickeln von mehreren Statorhälften von zweiteilig ausgebildeten, zweipoligen Statoren von elektrischen Maschinen. Die Anlage weist eine Vielzahl von längs einer Transporteinrichtung angeordneten Wickelstationen entsprechend den vorstehend beschriebenen Vorrichtungen auf. Die einzelnen Wickelstationen sind bevorzugt über einen gemeinsamen Antriebsmotor antreibbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine teilweise geschnittene Seitenansicht einer Station zum Wikkeln von zweipoligen Statoren für Elektromotoren;
- Fig. 2 die Stimansicht eines zweipoligen Stators;
- Fig. 3 die Stimansicht eines Teils des Stators von Fig. 2 mit eingelegter Wicklung und seitlich aufgesetztem Isolationsteil mit Anschlusselementen;
- Fig. 4 - 6 drei verschiedene Ausführungsformen von in Anschlusselemente einsetzbaren Kontaktelementen;
- Fig. 7 die Draufsicht auf eine Anlage mit mehreren Wickelstationen zum gleichzeitigen Wickeln mehrerer Statorhälften.

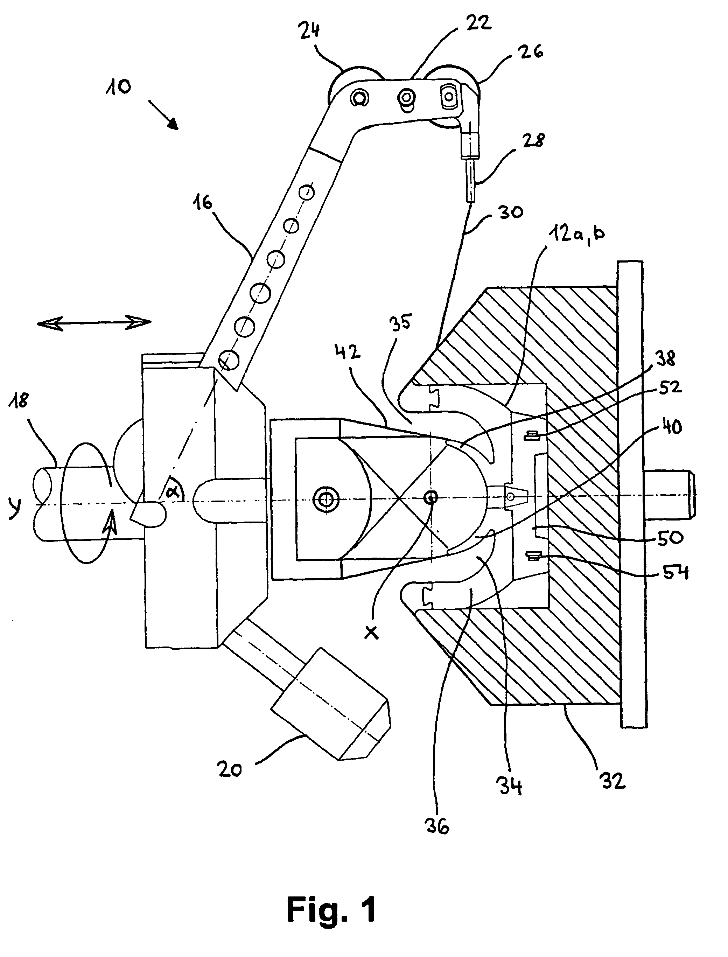

Eine in Fig. 1 gezeigte Station 10 zum Wickeln eines in Achsenrichtung x in zwei Hälften 12a, b geteilten, beispielsweise durch Stanzpaketieren von identischen Blechlamellen zu einem Blechpaket hergestellten Stators 14 eines nicht näher dargestellten Elektromotors weist einen Wickelarm 16 auf, der in einem spitzen Winkel α zur Rotationsachse y auf der Achswelle 18 einer in der Zeichnung nicht dargestellten Antriebseinheit angeordnet ist. Ein auf der dem Wikkelarm 16 gegenüberliegenden Seite angeordnetes Gegengewicht 20 dient der Vermeidung einer Unwucht während der rotierenden Wickelbewegung des Wikkelarmes 16. Am freien Ende des Wickelarmes 16 sitzt ein mit diesem starr verbundener Drahtführer 22 mit zwei Umlenkrollen 24, 26 und einer Drahtausgabeöffnung 28. Ein Draht 30 aus Kupfer wird von einer in der Zeichnung nicht dargestellten Vorratsrolle abgewickelt, über die Umlenkrollen 24, 26 des Drahtführers 22 und von diesem durch die Drahtausgabeöffnung 28 geführt. Die Achswelle 18 mit aufgesetztem Wickelarm 16 und Draht-Leithülse 42 ist längs der Rotationsachse y hin und her verschiebbar.

Die zu bewickelnde Statorhälfte 12a bzw. 12b wird zum Wickeln von einer Wikkelform 32 umfasst. Diese Wickelform 32 dient dazu, den an ihrer Oberfläche entlang geführten Draht 30 in die hierfür vorgesehene, von der Statorwand 36 und den von der Statorwand 36 beabstandeten Polhörnem 38, 40 begrenzte Nut 34 der Statorhälfte 12a, b einzulegen. Während die Wickelform 32 einen stetigen Übergang zur Innenfläche der Statorwand 36 gewährleistet, werden die Polhörner 38, 40 von einer in der Rotationsachse y angeordneten Draht-Leithülse 42 umfasst, so dass der Draht 30 an der Oberfläche der Draht-Leithülse 42 entlang in die Nut 34 geführt wird. Die durch die Polhörner 38, 40 und durch die Statorwand 36 gebildete Nut 34 wird zur einfacheren Drahteinführung durch den von der Wickelform 32 und der Draht-Leithülse 42 gebildeten Nuteinlauftrichter 35 vergrössert.

Die beiden Statorhälften 12a, b sollten vorzugsweise vor dem Wickelvorgang zur Isolation der Nuten 34 mit Kunststoff umspritzt werden.

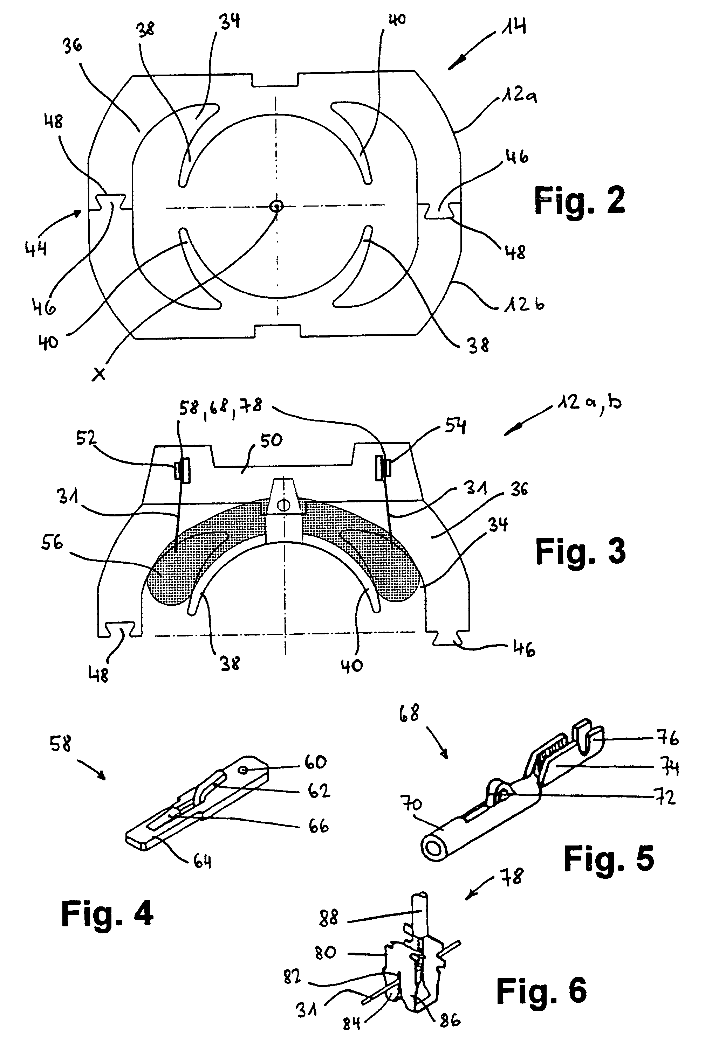

Wie in Fig. 2 gezeigt, können die beiden Statorhälften 12a, b nach der Wicklung zum Stator 14 zusammengefügt werden. Im vorliegenden Beispiel wird die Verbindung durch eine Nut/Feder-Anordnung 44 hergestellt, wobei jede Statorhälfte 12a, b an einer Verbindungsstelle eine längslaufende, querschnittlich schwalbenschwanzförmige Feder 46 und an der anderen Verbindungsstelle eine entsprechend hinterschnittene, längslaufende Nut 48 aufweist. Die beiden Teile können entweder seitlich ineinander geschoben oder aber bei geeigneter Ausbildung der Nut/Feder-Verbindung 44 zusammengeclipst werden. Selbstverständlich gibt es noch viele weitere geeignete Möglichkeiten von Verbindungssystemen für die beiden Statorhälften 12a, b.

Gemäss Fig. 3 ist seitlich an jeder Statorhälfte 12a, b ein Kunststoffkörper 50 aus elektrisch isolierendem Material angeordnet. Auf diesem Kunststoffkörper 50 sitzen je zwei Anschlusselemente 52, 54 mit in diesen angeordneten, weiter unten näher beschriebenen Kontaktelementen, die einerseits die freien Enden 31 einer durch den Draht 30 gebildeten Feldspule 56 aufnehmen, und andererseits die für den Betrieb des Elektromotors erforderliche Kontaktierung mit einer Stromquelle ermöglichen.

In den Fig. 4 bis 6 sind verschiedene Ausführungsformen von Kontaktelementen oder Terminals 58, 68, 78 dargestellt, welche in die Anschlusselemente 52, 54 des Kunststoffkörpers 50 eingesetzt werden.

Das in Fig. 4 dargestellte Hakenterminal 58 weist eine Kontaktfahne 60 zur späteren Kontaktierung mit einer Stromquelle, einen Kontakthaken 62 zum Festklemmen der freien Enden 31 des Drahtes 30 der Feldspule 56 und ein Einsetzteil 64 mit einem von diesem abragenden Feststellteil 66 zur Verankerung des Hakenterminals 58 in den Anschlusselementen 52, 54 auf.

Ein in Fig. 5 gezeigtes Crimpterminal 68 weist ein Einsetzteil 70 mit einem hiervon abragenden Feststellteil 72 zur Fixierung des Crimpterminals 68 in den Anschlusselementen 52, 54 auf. Zwei querschnittlich U-förmige Kanäle 74, 76 dienen der Aufnahme der freien Enden 31 des Drahtes 30 der Feldspule 56, wobei der frei abragende Kanal 76 der ersten Fixierung des Drahtes 30 dient. Die eigentliche Kontaktierung des Drahtes 30 erfolgt auf einer Crimpeinrichtung durch Zusammenpressen des Kanals 74 bei gleichzeitigem Abschneiden des frei abragenden Kanals 76.

Fig. 6 zeigt ein sogenanntes Mag-Mate-Terminal 78, welches an seinem in die Anschlusselemente 52, 54 einzusetzenden Teil 80 unter Freilassung eines Spaltes 82 in zwei Schenkelteile 84, 86 aufgeteilt ist. Die freien Enden 31 des Drahtes 30 der Feldspule 56 werden bei Verwendung dieses Mag-Mate-Terminals 78 zunächst in Schlitze der Anschlusselemente 52, 54 eingelegt. Beim Einsetzen des Terminals in die Anschlusselemente 52, 54 werden die freien Enden 31 des Drahtes 30 der Feldspule 56 vom Spalt 82 des Terminals 78 aufgenommen. Durch den über die innenseitig aufgerauhten Schenkelteile 84, 86 ausgeübten Druck wird die Isolation des Drahtes zerstört und elektrischer Kontakt hergestellt. Die spätere elektrische Kontaktierung mit einer Stromquelle erfolgt über eine weitere Anschlussfahne 88.

Das Einlegen der freien Enden 31 des Drahtes 30 der Feldspule 56 in die Terminals erfolgt beispielsweise durch eine entsprechende Einlegebewegung des Wickelarmes 16. Je nach Konzept der Wickelstation 16 kann das Einlegen des Wickeldrahtes 30 beispielsweise auch mit einem Greifer erfolgen.

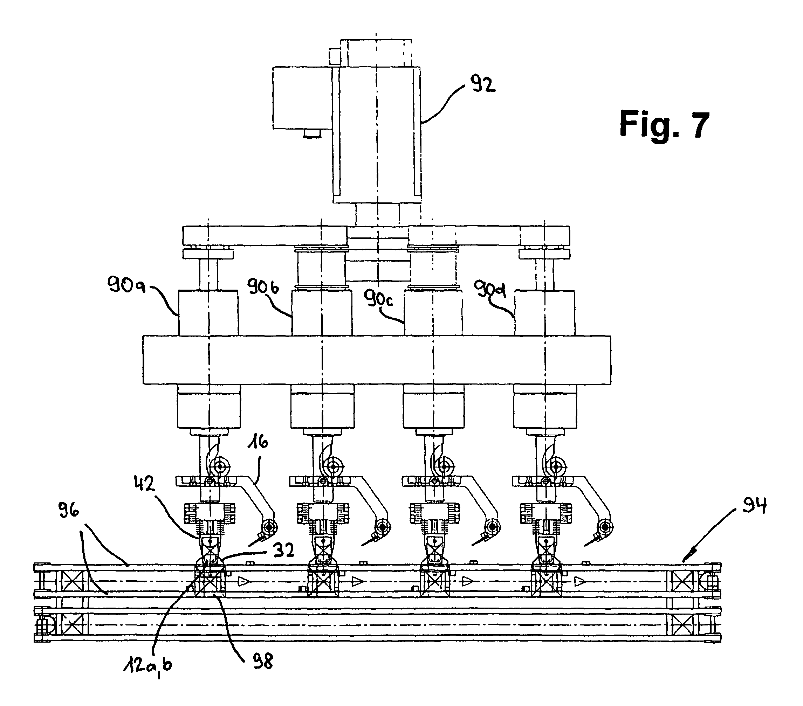

Die in Fig. 7 dargestellte Anlage zeigt beispielhaft vier identische Wickelstationen 90a, b, c, d, die in einer Reihe angeordnet sind und über einen gemeinsamen Antriebsmotor 92 verfügen. Die Wickelformen 32 mit den darin eingesetzten Statorhälften 12a bzw. b werden auf Transportpaletten 98 mittels eines Transportsystems 94 über Förderbänder 96 an die Wickelstationen 90a, b, c, d taktweise herangeführt und nach erfolgter Wicklung taktweise weggeführt.

## Patentansprüche

1. Verfahren zum Einlegen von Draht (30) über einen um eine senkrecht zur Statorachse (x) liegende Rotationsachse (y) rotierenden Wickelarm (16) in Form einer Feldspule (56) zwischen Polhömer (38,40) und Statorwand (36) eines aus zwei Statorhälften (12a,b) bestehenden zweipoligen Stators (14) einer elektrischen Maschine,
**dadurch gekennzeichnet, dass**
während des Wickelvorganges zur zeitweiligen Bildung einer vergrösserten Einlegenut (34,35) für den Draht (30) eine Wickelform (32) an die Aussenkontur des Stators (14) angelegt wird und die freien Enden der Polhörner (38,40) mit einer Draht-Leithülse (42) abgedeckt werden.

2. Verfahren nach Anspruch 1, **dadurch gekennzeichnet, dass** der Wickelarm (16) und die Draht-Leithülse (42) entlang der Rotationsachse (y) verschiebbar sind.

3. Verfahren nach Anspruch 1 oder 2, **dadurch gekennzeichnet, dass** der Zusammenbau von je zwei Statorhälften (12a,b) zum Stator (14) nach durchgeführter Wicklung über eine Nut/Feder-Verbindung (44) erfolgt.

4. Verfahren nach Anspruch 3, **dadurch gekennzeichnet, dass** zur Bildung der Nut/Feder-Verbindung (44) jede Statorhälfte (12a,b) je eine längslaufende, querschnittlich schwalbenschwanzförmige Feder (46) und eine dieser entsprechende längslaufende hinterschnittene Nut (48) aufweist.

5. Verfahren nach einem der Ansprüche 1 bis 4, **dadurch gekennzeichnet, dass** seitlich an jeder Statorhälfte (12a,b) ein Kunststoffkörper (50) aus elektrisch isolierendem Material mit Anschlusselementen (52,54) für in diese einsetzbare Kontaktelemente (58,68,78) angeordnet ist.

6. Vorrichtung zum Einwickeln von aus Draht (30) gewickelten Feldspulen (56) zwischen Polhömer (38,40) und Statorwand (36) eines aus zwei Statorhälften (12a,b) bestehenden zweipoligen Stators (14) einer elektrischen Maschine, mit einem um eine Rotationsachse (y) drehbaren Wickelarm (16),
**gekennzeichnet, durch**
eine der Statorwand (36) der zu wickelnden Statorhälfte (12a,b) während des Wickelvorganges anliegende Wickelform (32) und eine den Polhömem (38,40) während des Wickelvorganges anliegende Draht-Leithülse (42), wobei die Wickelform (32) und die Draht-Leithülse (42) Teile einer Einlegenut (34,35) bilden.

7. Vorrichtung nach Anspruch 6, **dadurch gekennzeichnet, dass** der Wickelarm (16) und die Leithülse (42) entlang der Rotationsachse (y) verschiebbar sind.

8. Anlage zum gleichzeitigen Wickeln von mehreren Statorhälften (12a,b) von zweiteilig ausgebildeten, zweipoligen Statoren (14) von elektrischen Maschinen, **dadurch gekennzeichnet, dass** sie eine Vielzahl von längs einer Transporteinrichtung (94,96) angeordneten Wickelstationen (90a,b,c,d) entsprechend den Vorrichtungen nach Anspruch 6 oder 7 aufweist.

9. Anlage nach Anspruch 8, **dadurch gekennzeichnet, dass** die Wickelstationen (90a,b,c,d) über einen gemeinsamen Antriebsmotor (92) antreibbar sind.

## Claims

1. Process for insertion of wire (30), by way of a winding arm (16) rotating about a rotation axis (y) lying perpendicular to the stator axis (x), in the form of a field coil (56) between the pole horns (38, 40) and the stator wall (36) of a double-pole stator (14), consisting of two stator halves (12a, b), of an electrical machine,
**characterised in that**
during the winding process, for temporary formation of an enlarged insert groove (34, 35) for the wire (30), a winding accessory (32) is laid against the outer edge of the stator (14) and the free ends of the pole horns (38, 40) are covered with a wire guide sleeve (42).

2. Process according to claim 1, **characterised in that** the winding arm (16) and the wire guide sleeve (42) are movable along the rotation axis (y).

3. Process according to claim 1 or 2, **characterised in that** each pair of stator halves (12a, b) is joined together after winding by way of a tongue and groove connection (44) to form the stator (14).

4. Process according to claim 3, **characterised in that** to form the tongue and groove connection (44), each stator half (12a, b) has a linear tongue (46) of dovetail cross section and a correspondingly under-cut linear groove (48).

5. Process according to any of claims 1 to 4, **characterised in that** at the side of each stator half (12a, b) is arranged a plastic body (50) of electrically isolating material with connection elements (52, 54) for contact elements (58, 68, 78) which can be inserted therein.

6. Device for winding field coils (56) wound from wire (30) between pole horns (38, 40) and stator wall (36) of a double-pole stator (14), consisting of two stator halves (12a, b), of an electrical machine, with a winding arm (16) rotatable about a rotation axis (y),
**characterised by**
a winding accessory (32) to be laid during the winding process against the stator wall (36) of the stator halves (12a, b) to be wound, and a wire guide sleeve (42) laid against the pole horns (38, 40) during the winding process, whereby the winding accessory (32) and the wire guide sleeve (42) form parts of an insert groove (34, 35).

7. Device according to claim 6, **characterised in that** the winding arm (16) and the guide sleeve (42) are movable along the rotation axis (y).

8. Plant for simultaneous winding of several stator halves (12a, b) of two-piece double-pole stators (14) of electrical machines, **characterised in that** they have a multiplicity of winding stations (90a, b, c, d) corresponding to the devices according to claim 6 or 7 and arranged along a transport device (94, 96).

9. Plant according to claim 8, **characterised in that** the winding stations (90a, b, c, d) can be driven by way of a common drive motor (92).

## Revendications

1. Procédé de mise en place d'un fil (30), au moyen d'un bras de bobinage (16) pivotant autour d'un axe de rotation (y) disposé perpendiculairement à l'axe (x) du stator, pour former une bobine de champ (56) entre des cornes polaires (38,40) et une paroi (36) de stator d'un stator bipolaire (14) de machine électrique, composé de deux moitiés (12a, b) de stator,
**caractérisé en ce que**,
pendant le processus de bobinage, un profil de bobinage (32) est posé contre le contour externe du stator (14) pour former temporairement pour le fil (30) une rainure agrandie (34, 35) de mise en place, et les extrémités libres des cornes polaires (38, 40) sont recouvertes d'une douille de guidage (42) de fil.

2. Procédé selon la revendication 1, **caractérisé en ce que** le bras de bobinage (16) et la douille de guidage (42) de fil peuvent coulisser le long de l'axe de rotation (y).

3. Procédé selon la revendication 1 ou 2, **caractérisé en ce que** l'assemblage de deux moitiés respectives (12a, b) de stator pour former un stator (14) est effectué, après l'exécution du bobinage, au moyen d'une connexion (44) à ressorts et rainures.

4. Procédé selon la revendication 3, **caractérisé en ce que** chaque moitié (12a, b) de stator comporte un ressort longitudinal (46) à section transversale en queue d'aronde et une rainure longitudinale correspondante (48) en contre-dépouille afin de constituer la connexion (44) par ressorts et rainures.

5. Procédé selon l'une quelconque des revendications précédentes, **caractérisé en ce qu'**un corps (50) de matière plastique en matière électriquement isolante, à éléments de raccord (52, 54) pour les éléments de contact (58, 68, 78) qui y sont insérables, est disposé latéralement sur chaque moitié (12a, b) de stator.

6. Dispositif de bobinage, au moyen d'un bras de bobinage (16) pivotant autour d'un axe de rotation (y), de bobines de champ (56) bobinées en fil (30) entre des cornes polaires (38, 40) et une paroi (36) de stator d'un stator bipolaire (14) de machine électrique constitué de deux moitiés (12a, b) de stator
**caractérisé par**
un profil de bobinage (32), posé pendant le processus de bobinage contre la paroi (36) de stator de la moitié de stator (12a, b) à bobiner, et une douille de guidage (42) de fil posée pendant le processus de bobinage contre les cornes polaires (38, 40), d'une manière telle que le profil de bobinage (32) et la douille de guidage (42) de fil constituent des parties d'une rainure de mise en place (34, 35).

7. Dispositif selon la revendication 6, **caractérisé en ce que** le bras de bobinage (16) et la douille de guidage (42) peuvent coulisser le long de l'axe de rotation (y).

8. Installation de bobinage simultané de plusieurs moitiés (12a, b) de stator pour des stators bipolaires (14) de machines électriques composés de deux parties, **caractérisée en ce qu'**elle comprend une série de stations de bobinage (90a, b, c, d), conformes aux dispositifs des revendications 6 ou 7, disposées le long d'un mécanisme de transport (94, 96).

9. Installation selon la revendication 8, **caractérisée en ce que** les stations de bobinage (90a, b, c, d) peuvent être entraînées par un moteur d'entraînement commun (92).
